# EUROPEAN PATENT APPLICATION

(11) **EP 2 172 885 A1**
(43) Date of publication of application: **07.04.2010**
(21) Application number: 08305619.2
(22) Date of filing: 30.09.2008
(51) Int. Cl.: G06Q 10/00

(54) **Method and system for simulating and optimizing revenue from service fees in or relating to online service processes**

(71) Applicant: Amadeus S.A.S., 06902 Sophia Antipolis Cedex (FR)
(72) Inventor: Plat, Christophe Amadeus S.A.S., 06600, Antibes (FR); Hourdou, Nicholoas, 06902, Sophia Antipolis Cedex (FR); Prieur, Mikael, 06600, Antibes (FR)
(74) Representative: Coret, Sophie V.G.A.

(57) **Abstract**

A method of managing a birling process to optimize or simulate different models in order to reach a predetermined level of a metric associated with the service, the method comprising: determining an input model to optimize or simulate; determining existing associated models; comparing the existing model and the input model; iterating one or more parameters of the input model in order to achieve the predetermined level of the metric; and determining the iterated input model.

## Description

### Field of the invention

The present invention relates to a method and system for checking and optimizing of revenue relating to online service processes, and in particular to system and method associated with a service fee engine.

### Background of the invention

In the context of the travel industry, users often use travel agents to source and purchase travel products. Traditionally, airlines pay a commission to the travel agent for each ticket sold. However, the advent of low cost carriers has pushed full service carriers to revise this model, and they are now reluctant to pay commissions. This has placed greater pressure on travel agencies, who have to find a new way of being remunerated. To address this issue more and more travel agencies have started to rely on a service fee engine or calculator to assist in computing fees that are paid directly by the customer.

A service fee engine provides an integrated solution for the storage, calculation and collection of service related fees, based on the agent activity and on reservation parameters, such as ticket price or booking class of an airplane etc. With a service fee engine it is possible to determine increased revenues per sale and to charge appropriate service fees when commissions are no longer paid by airlines. The service fee engine can include fee models that are flexible and depend on the requirements of the agent. The service fee engine can interact with other parts of a travel software environment, for example interface records, customer profiles, selling platforms and also global distribution systems (GDS).

US 2005/304819 (University of Washington) discloses a method and system for providing predictive future costs for an outcome based on historical pricing information in the domain of airline tickets. The method suggests a specific time to buy a ticket in order to optimize profit. There is no suggestion of a solution that overcomes some of the problems currently being encountered by lack of commission and the changing business model for a travel agency.

The present service fee engines do not deal with all the issues currently being encountered by travel agencies in terms of realizing a valid business model. Accordingly, improvements to current systems are required.

One aspect of the present invention is to overcome at least some of the problems associated with the prior art.

A further aspect of the present invention is to provide a way of optimizing agent revenue.

### Summary of the invention

The present invention provides a method and system for simulating and optimizing agent revenue, as described in the accompanying claims.
According to one aspect of the present invention there is provided a method of managing a service fee computation process to optimize or simulate different service fee models in order to obtain a predetermined level of a metric associated with the service fee model, wherein the service fee model includes one or more parameters which impact the metric, the method comprising: determining an input service fee model; determining one or more existing associated service fee models; changing the one or more parameters of the input model in an iterative manner to optimise or simulate the or each parameter thereby achieving different values for the predetermined level of the metric; comparing the or each existing model with the input model as the parameters are changed; and selecting a final version of the input service fee model which provides the closest match to the predetermined level of the metric.
According to a second aspect of the present invention there is provided a system for managing a service fee computation process to optimize or simulate different service fee models in order to obtain a predetermined level of a metric associated with the service fee model, wherein the service fee model includes one or more parameters which impact the metric, the system comprising: an input module for inputting an input service fee model; a search module for identifying one or more existing associated service fee models; an optimizer engine for changing the one or more parameters of the input model in an iterative manner to optimise or simulate the or each parameter thereby achieving different values for the predetermined level of the metric; a comparison module for comparing the or each existing model with the input model as the parameters are changed; and a selection module for selecting a final version of the input service fee model which provides the closest match to the predetermined level of the metric.

### Brief description of the drawings

Reference will now be made, by way of example, to the accompanying drawings, in which:
Figure 1 is a block diagram of the architecture for a service fee engine, in accordance with an embodiment of the invention, given by way of example,
Figure 2 is a graph showing how Newton's iterations may be used to obtain a desired revenue, in accordance with an embodiment of the invention, given by way of example.
Figure 3 is a combination block diagram and flowchart of production traffic capture, in accordance with an embodiment of the invention, given by way of example,
Figure 4 is a combination block diagram and flowchart of the simulation stage, in accordance with an embodiment of the invention, given by way of example;
Figure 5 is a combination block diagram and flowchart of the report generation stage, in accordance with an embodiment of the invention, given by way of example;
Figure 6 is a combination block diagram and flowchart of an optimized revenue stage, in accordance with an embodiment of the invention, given by way of example;
Figure 7 is a combination block diagram and flowchart of the rule release stage, in accordance with an embodiment of the invention, given by way of example.

### Detailed description of the preferred embodiments

The present invention is described with reference to the travel environment, although it will be appreciated that it could apply to different environments. For example, any environment where services or goods prices are computed based on several input parameters, such as raw material price etc. The description uses maximizing revenue by optimizing or simulating agent service fee pricing rules as an example. It will be appreciated that other metrics than revenue and other models than agent service fee pricing rules may be equally relevant to the present invention.

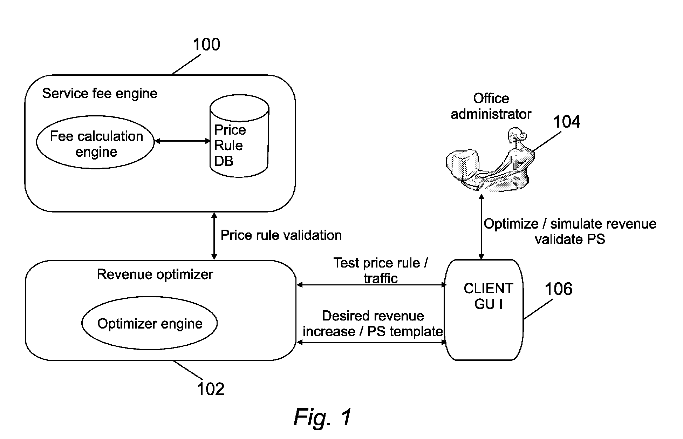

Referring initially to figure 1 an overall view of the system is displayed. The system includes a service fee engine 100 in communication with a revenue optimizer 102. A user 104 interacts with a client Graphic User Interface (GUI) 106 in order to communicate with the revenue optimizer 102. There is a two-way communication between the user and the client GUI through which revenue can be optimized and/or simulated. Similarly there is communication between the revenue optimizer and the client GUI to identify test pricing rules and desired revenue increases or levels. Pricing rules validations are communicated between the service engine and the revenue optimizer, and by means of this, the user will be provided with the ability to carry out at least three independent services. These include:
- revenue simulation in order to access the impact of new pricing rules on income for the user;
- revenue optimization in order to automatically evaluate the optimal or best pricing rules for a specific income target;
- release of pricing rules in order to automate the pricing rule promotion after either simulation or optimization has occurred.

Revenue simulation is a service which enables the user to analyse the use of the services fee engine and pricing rules. The revenue simulator shows customer trends and enables adaptation to these. The revenue simulator is typically structured on four axes as will be described in greater detail below. The first axis involves automatic population of a historical database with key information on the service fee engine activity by the agent revenue optimizer. This allows subsequent realistic replay or running of scenarios to test new or modified pricing rules or other models, for example by running a sample of traffic.

The second axis generates reports containing statistical indicators. In this way, the results from a simulation can be interpreted by the agent revenue optimizer to build different types of reports in order to analyse new modified pricing rules so as to make decisions. An example of a report that can be generated is the service fee use report. This report illustrates the level of use of the service fee engine by showing the amount of computation, the application that initiated the computation and any command used to launch the computation. An alternative report is the activity view. More complex reports of activity may also be offered. In order to generate the activity view a number of different views are used. The views may include sets of parameters which allow a specific part of the travel office activity to be focused upon. The views also choose which statistical indicators are required in the report. Once the view has been created it can be applied to the database to produce a report including all statistical indicators identified in the view either literally or by correspondence to one or more of the parameters. For example, a particularly useful view is the pricing rules use view. This is a view which groups activities by pricing rule elements and which provides a view similar to the service fee use report but for each specific pricing rule.

A third axis identifies non profitable activities in order to improve pricing rules. An agent can identify which activities are profitable and which are not by carrying out a number of different simulations. Pricing rules that are linearly dependent on ticket price could result in a non profitable situation if the most chosen flights are the cheapest. In this situation, a flat fee would be likely to offer a more profitable model. Similarly, pricing rules which depend on the number of operations would be less profitable if travellers did not opt to use changes or special requests in order to increase the number of operations. This third axis also identifies the traveller's main behaviour enabling agents to adapt pricing rules to fit that behaviour and therefore maximise profitability.

A fourth axis simulates the impact of any promotional offers or similar optional inclusions. This allows an agent to determine the impact of a particular promotional offer on its revenue. A simulation with a particular pricing rule corresponding to the promotional offer can be launched. The agent revenue optimizer, in accordance with the present invention, will then provide a report which can be used to compare the impact of special offers on the pricing rule.

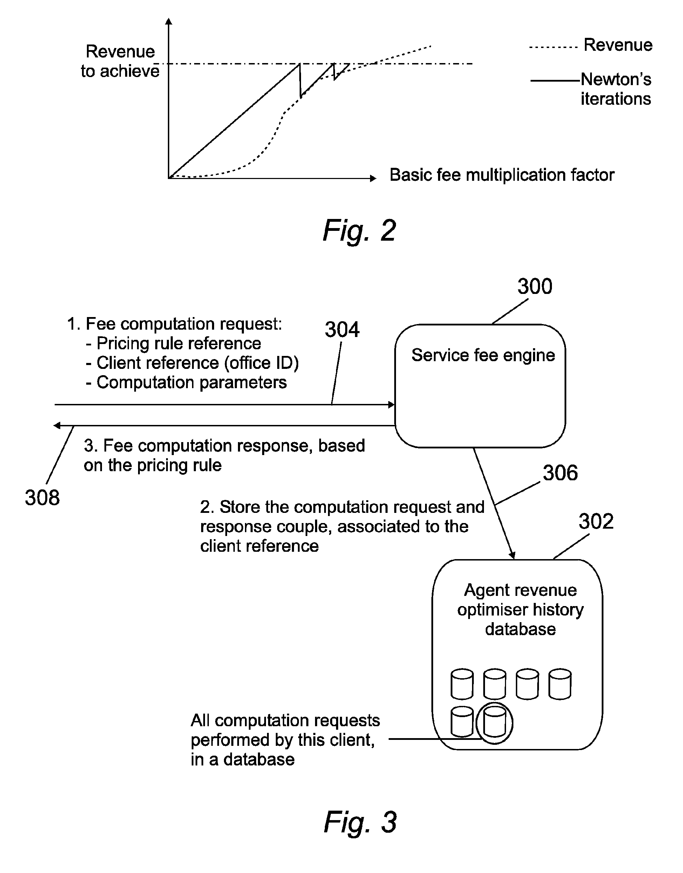

The revenue optimization service enables the user to optimize revenue and therefore ensure competitiveness with other agents. Using the revenue optimization service it is possible to choose the required revenue and then adapt the chosen pricing rule to achieve this level of revenue. This is realised by carrying out a linear modification of a set of the parameters of a particular pricing rule in order to achieve the desired revenue with the simulation. As services are not always in linear dependency on the parameters, a method such as the Newton's iteration method may be used to achieve the desired revenue. A graph demonstrating how the Newton's iteration is used to achieve predetermined revenue is shown in figure 2. From this it can be seen that stepwise changes to the basic multiplication factor are carried out until the desired revenue level is achieved.

The release rules for pricing will now be described. Once the user or agent has modified or created a pricing rule which is satisfactory in terms of simulation and optimization, it will be a pricing rule that the agent will want to use. As a result of this the agent revenue optimizer automatically releases such pricing rules and introduces them into the pricing rule database making them fully available to use.

The reference to pricing rules is an example of a model (for example a new business model) which may be optimized or simulated by the present invention. It will be appreciated that the present invention could apply to any other appropriate model, for example maximizing sales or reservations, etc.

The implementation of the agent revenue optimizer application feature, in accordance with the present invention will now be described with reference to the mechanism, interfaces and implementation steps. Each of the steps can be provided by a dedicated message or step, one for each type of functionality.

Referring initially to figure 3 the production traffic capture process will now be described. A service fee engine 300 is connected to an agent revenue optimizer historic database 302. An agent or other user can access the service fee engine by means of messages and receive information by means of replies. The first message 304 that is sent by an agent is the fee computation request which includes pricing rule reference, a client reference (for example in office identifier) and computational parameters for the request. This is received at the service fee engine which then requests the agent revenue optimizer to store the computational request and response associated therewith in respect of the client reference (message 306). In order to manage this efficiently, all computational requests by a particular client are stored in a dedicated database. This ensures that any traffic associated with computational requests and their response are captured and stored in relation to each client. The service engine may generate the computation response based on the pricing rules if that has been requested and then send the results of this in a message 308 to the user.

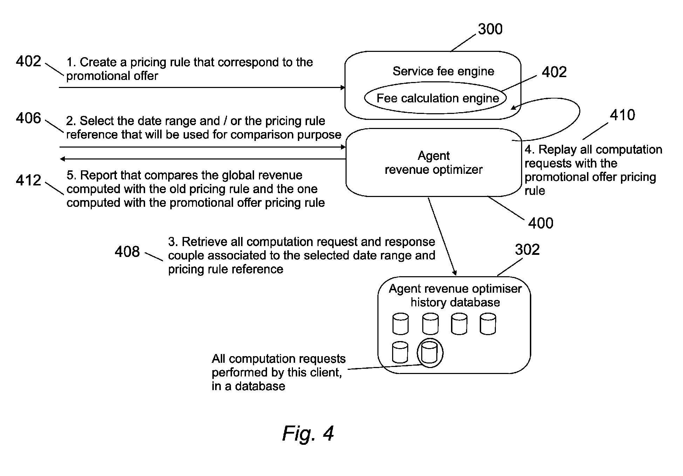

Referring to figure 4, the simulation process will now be described. If a user creates a new pricing rule corresponding to, for example a promotional offer, then applies it to the production traffic that is already known, the agent revenue optimizer can generate reports that compares the revenue achieved based on the old pricing rules as opposed to that based on the new pricing rules. In order to do this, in accordance with the present invention, the system includes an agent revenue optimizer 400 located between the service engine 300 and the agent revenue optimizer historic database 302. The first step 402 is for the agent to create a pricing rule that corresponds, for example to a promotional offer. This message will be sent to the service fee engine which includes a fee calculation engine 404. In addition, the user will generate another message 406 in which the user selects the date range and/or pricing rules that will be used for comparison purposes with the new pricing rule entered at message 402. The agent revenue optimizer retrieves all computational requests associated with the selected date range and pricing rule reference from the agent revenue optimizer historic database in message 408. The agent revenue optimizer then utilises the fee calculation engine in order to replay or run all computational requests (410) in conjunction with the promotional offer pricing rule proposed at message 402. After all the calculations have been completed a report comparing the global revenue computed with the old pricing rule and that with a new promotional pricing rule will be generated 412.

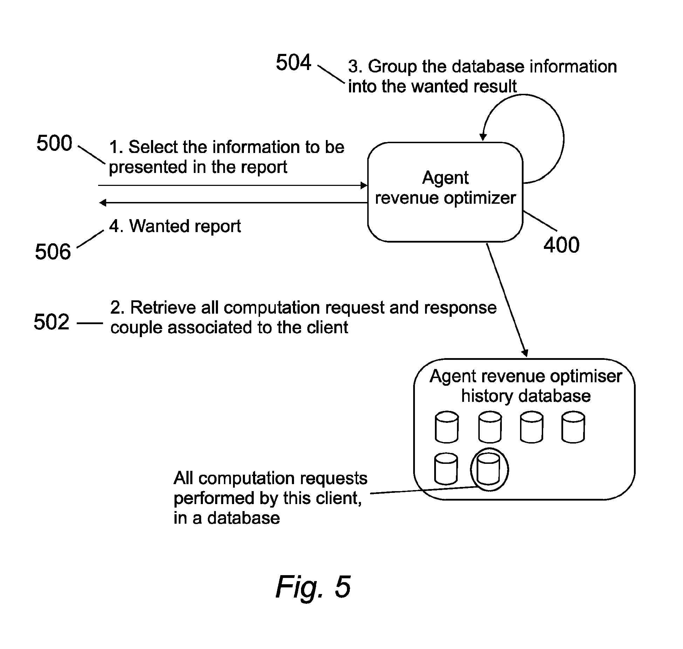

Referring now to figure 5, the report generation process will now be described. The agents or users select the information to be presented in the report by means of message 500. The agent revenue optimizer retrieves all computational requests and associated responses from that particular client by means of a message request 502 to the agent revenue optimizer historical database. The agent revenue optimizer then groups the database information into the required results in order to generate a report 504. The report is then produced and forwarded to the agent 506.

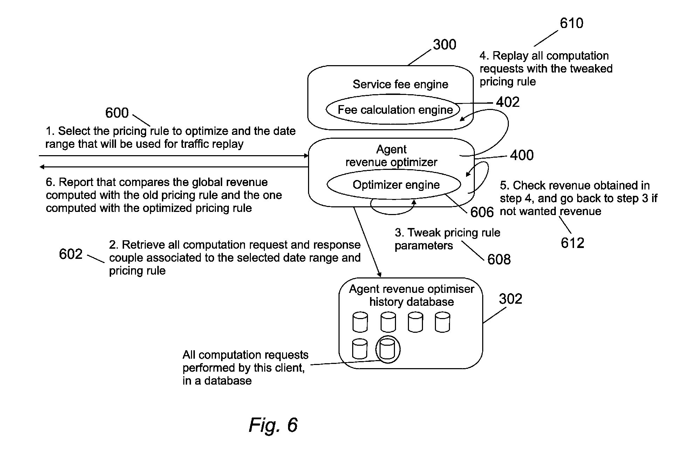

In figure 6, the optimization of revenue process is described in greater detail. The agent generates a message 600 selecting the pricing rule to optimize and the date range over which this is to be applied. The agent revenue optimizer retrieves computational requests and responses associated therewith along with the selected date range and pricing rules from the agent revenue optimizer historic database by means of a message 602. An optimizer engine 606 in the agent revenue optimizer adjusts the pricing rule parameters in an iterative fashion 608. This can be by tweaking the price rule parameters and then carrying out the subsequent steps 610 and 612 (see below) and then reiterating this as many times as necessary in order to find the best results. After each adjustment to the pricing rule parameters the service fee engine will replay or run all computation requests with the adjusted pricing rule (step 610). The agent revenue optimizer will check the revenue 612 obtained in step 610 and if necessary will return to step 608 if the required revenue level has not been achieved. Steps 608, 610 and 612 can be repeated as often as necessary. Finally, a report that compares the global revenue computed with the old pricing rules with that computed with the optimized pricing rules will be generated at step 614. In this way, the user can modify a pricing rule by choosing target revenue. The optimization engine in the agent revenue optimizer can incrementally change the pricing rule parameters, for example using Newton iteration until the revenue computed by the service fee engine reaches the required level. Typically this required level will be a maximum.

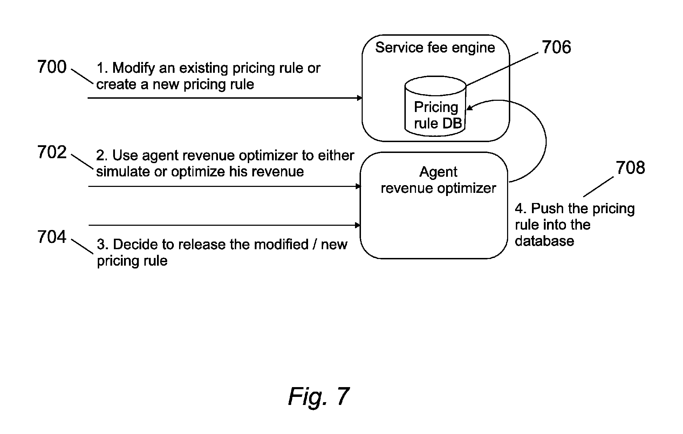

Once the defined rule modifications have been made are ready to release, a new version of the pricing rules including these modifications can be released to the user. This is shown in figure 7 where the user modifies an existing pricing rule or creates a new pricing rule 700. Then as previously described the agent revenue optimizer either simulates or optimizes the revenue of this particular pricing rule 702. At an appropriate time the user may decide to release the modified or new pricing rule 704 which is then pasted from the agent revenue optimizer to a pricing rule database 706 in the service fee engine by means of step 708. The stored pricing rule may then be used in future calculations or decision-making purposes.

This invention has been applied to the computation of travel agent service fees in the travel environment. However, it will be appreciated that the invention may apply to other environments, for example other selling and marketing applications such as hotels in a specific zone; combinations of flight and hotel; etc. Also different models can be iterated in order to maximise, optimize or simulate a different metric than profit or revenue. For example maximum uptake or seats may be desirable and the iteration can be used to suggest how this may best be achieved. Any comparisons which relate to pricing rules may also apply to comparing a new model with an old, stored model in other examples where pricing rule is not the model.

It will be appreciated that this invention may be varied in many different way and still remain within the intended scope and spirit of the invention.

Furthermore, a person skilled in the art will understand that some or all the functional entities as well as the processes themselves may be embodied in software, or one or more software-enabled modules and/or devices. In addition any process or method steps may be carried out by an appropriate module, even if that module is not mentioned per se herein.

## Claims

1. A method of managing a service fee computation process to optimize or simulate different service fee models in order to obtain a predetermined level of a metric associated with the service fee model, wherein the service fee model includes one or more parameters which impact the metric, the method comprising:-
- determining an input service fee model;
- determining one or more existing associated service fee models;
- changing the one or more parameters of the input model in an iterative manner to optimise or simulate the or each parameter thereby achieving different values for the predetermined level of the metric;
- comparing the or each existing model with the input model as the parameters are changed;
- selecting a final version of the input service fee model which provides the closest match to the predetermined level of the metric.

2. The method of claim 1, further comprising outputting the final version of the input service fee model for use.

3. The method of claim 1 or claim 2, further comprising selecting parameters to change based in the service fee input model.

4. The method of any preceding claim, further comprising selecting the or each existing service fee model based on the commonality of parameters with the input service fee model.

5. The method of any preceding claim, further comprising selecting parameters for changing from the list including pricing rules, dates, volumes of product or service for sale, type of product or service, value of product or service.

6. The method of any preceding claim, wherein the step of changing the or each parameter comprises applying a Newton iteration to obtain an optimized level.

7. The method of any preceding claim, for managing the service fee computation process for the sale of tickets by an agent.

8. The method of claim 7, further comprising outputting the final version of the input model to the agent for generating service fees for the sales or airline tickets.

9. A computer program comprising instructions for carrying out the method of any of claims 1 to 8, when said computer program is executed on a programmable apparatus

10. A system for managing a service fee computation process to optimize or simulate different service fee models in order to obtain a predetermined level of a metric associated with the service fee model, wherein the service fee model includes one or more parameters which impact the metric, the system comprising:-
- an input module for inputting an input service fee model;
- a search module for identifying one or more existing associated service fee models;
- an optimizer engine for changing the one or more parameters of the input model in an iterative manner to optimise or simulate the or each parameter thereby achieving different values for the predetermined level of the metric;
- a comparison module for comparing the or each existing model with the input model as the parameters are changed;
- a selection module for selecting a final version of the input service fee model which provides the closest match to the predetermined level of the metric.
